Europäisches Patentamt

European Patent Office

Office européen des brevets

(11) Publication number: **0 467 471 A2**

# EUROPEAN PATENT APPLICATION

(21) Application number: **91201864.5**

(22) Date of filing: **13.07.91**

(51) Int. Cl.5: **G01N 35/06**

(30) Priority: **20.07.90 US 556692**

(43) Date of publication of application:
**22.01.92 Bulletin 92/04**

(84) Designated Contracting States:
**BE CH DE FR GB IT LI LU NL**

(71) Applicant: **EASTMAN KODAK COMPANY**
**343 State Street**
**Rochester, New York 14650-2201(US)**

(72) Inventor: **Shaw, James David, c/o Eastman**

Kodak Company
Patent Department, 343 State Street
Rochester, New York 14650-2201(US)
Inventor: **Want, Nicholas, c/o Eastman Kodak**
**Company**
**Patent Department, 343 State Street**
**Rochester, New York 14650-2201(US)**

(74) Representative: **Phillips, Margaret Dawn et al**
**Kodak Limited Patent Department Headstone**
**Drive**
**Harrow, Middlesex HA1 4TY(GB)**

(54) **Mechanism for aspirating and dispensing liquids.**

(57) Liquid dispensing mechanisms are well-known for aspirating and dispensing liquids in clinical analyzers. However, some mechanisms are complex and involve several moving parts, all of which are subject to malfunction. Described herein is an improved liquid dispensing mechanism (10) which moves a dispensing tip (14) both vertically and rotationally between an aspirating station (A) and a dispensing station (B), preferably through an arc of a circle of rotation. The tip (14) is carried by a tip support (16) on a pump (12) which is slidably mounted on a carrier (22). The carrier (22) is mounted over a cam (50). A cam follower connected to the pump (12) extends through a slot (34) in the carrier (22) to the cam (50) inside. Stop means (110, 116) are provided for limiting the rotation of the carrier (22) between two circumferential positions to force the cam follower, and hence the pump (12) and the retained tip (14), to move relative to the still-rotating cam (50).

FIG. I

EP 0 467 471 A2

This invention relates to dispensing mechanisms and is more particularly concerned with liquid dispensing mechanisms which are used in analyzers of the type which repeatedly aspirate liquid from the same source.

Liquid dispensing mechanisms are used in clinical analyzers to aspirate and dispense various liquids as needed. In the "Ektachem 400"™ and/or "Ektachem 700"™ analyzers manufactured by Eastman Kodak Company, in addition to aspirating and dispensing a patient sample, a reference liquid has to be aspirated and dispensed when a potentiometric analysis is conducted using ISE (ion-selective element) test elements.

The mechanism which handles the reference liquid is somewhat complex for several reasons. First, the pump and the removable tip mounted thereon has to move between two operative "down" positions which correspond to the aspirating position at a reservoir and the dispensing position at a dispensing station. Between these positions, it moves to a raised inoperative position. Conveniently, movement between "down" positions is done rotationally wherein the two operative positions are circumferentially positioned on a circle of motion. Second, complexity is introduced because the tip insertion occurs at an angle from the vertical. This is necessary for clearance purposes. Hence, it is not sufficient to simply raise the pump and its tip but rather to raise it along a diagonal.

The mechanism to achieve this on the aforesaid analyzers available from Eastman Kodak Company has been useful and generally satisfactory. However, it has required the use of a large number of complex parts including a barrel cam, a cam follower mounted to always ride on the cam, a pinion gear, a rack cylinder which drives the pinion gear, a second rack mounted in the pump which is in turn driven by the pinion gear, and a modified Geneva mechanism for controlling the rotation of the barrel cam. The cam follower is connected to a yoke which in turn is hingedly and rotationally connected to the rack cylinder driving the pinion gear. Portions of this mechanism are illustrated in the Eastman Kodak User Manual entitled "E700/E500 Service Manual", Pub.# XP3080-13, pages 5, 6 and 12, dated August 1986.

Because so many moving parts are required, this conventional dispensing mechanism has been more expensive to build and maintain than it would be if it used fewer moving parts.

Therefore, it is an object of the present invention to provide a simpler liquid-aspirating and dispensing mechanism which requires fewer moving parts.

More particularly, in accordance with one aspect of the present invention, there is provided a liquid dispensing mechanism for use in an analyzer comprising:-

a support,

a pump including a tip support mounted thereon for retaining a disposable liquid-containing tip, and

moving means for moving the pump vertically and rotationally between at least two operative positions in which liquid is either aspirated into or dispensed from the tip, the moving means including a rotatable three-dimensional cam, a cam follower mounted for movement the cam, and rotating means for rotating the cam about a vertical axis between the at least two operative positions in response to command signals,

characterized in that the moving means further includes a carrier mounted over and surrounding the cam, coupling means for frictionally coupling the carrier to the cam for rotation therewith, and stop means for limiting the rotation of the carrier between two circumferential positions on the cam which correspond to the at least two operative positions.

Accordingly, it is an advantageous feature of the invention that a liquid-dispensing mechanism is provided which moves rotationally and vertically between at least two operational positions using fewer and simpler parts than have heretofore been required to achieve the same motions for the same purpose.

The present invention will now be described, by way of example only, with reference to the accompanying drawings in which:-

Figure 1 is a perspective view of a liquid-aspirating and dispensing mechanism constructed in accordance with the present invention;

Figure 2 is a fragmentary elevational view of the cam of the assembled mechanism shown in Figure 1, the cam follower being shown at a raised position at which the pump dispenser is inoperative with the pump carrier in phantom;

Figure 3 is a plan view of the mechanism shown in Figure 1;

Figure 4 is a partially broken away, elevational view but illustrating the cam follower in its lowermost position wherein it is biased by a downloading cam;

Figure 5 is a sectioned view taken generally along the line V-V of Figure 3, and shows the pump mounting on its carrier;

Figures 6A and 6B are fragmentary perspective views of the pump carrier and the cam (shown in phantom) to illustrate the relative movement between the two;

Figure 7 is an exploded elevational view similar to that of Figure 1, but illustrating a second embodiment according to the present invention;

Figure 8 is a perspective view illustrating the positioning of the mechanism shown in Figure 1 in a clinical analyzer; and

Figure 9 is a side elevational view of another embodiment of the pump carrier according to the present invention.

The invention is hereinafter described by reference to the preferred embodiments, in which the liquid to be aspirated and dispensed is a reference liquid used for potentiometric measurements, and is described with reference to an analyzer of a particular construction.

In addition, the invention is also useful to aspirate and dispense any other liquid, regardless of the configuration of the rest of the analyzer.

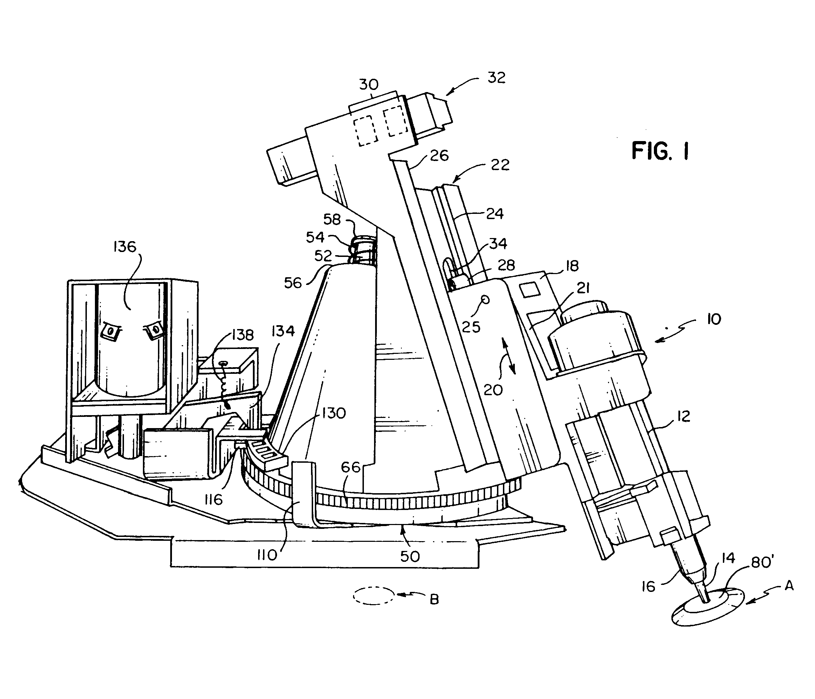

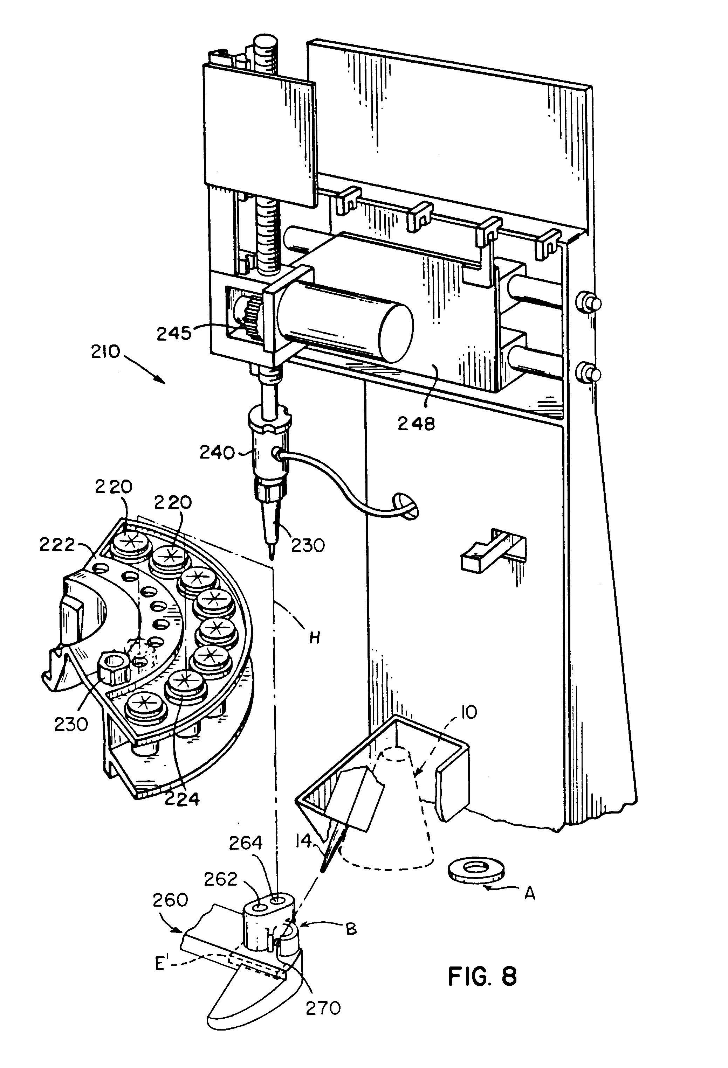

A preferred liquid dispensing mechanism is shown in Figure 1. The mechanism allows aspiration of liquid from station A, which is a reservoir of the liquid, and dispensing of a fraction or aliquot of the liquid so aspirated at station B. These same stations are shown in more detail in Figure 8. Alternatively, the positions of stations A and B can be reversed in some uses.

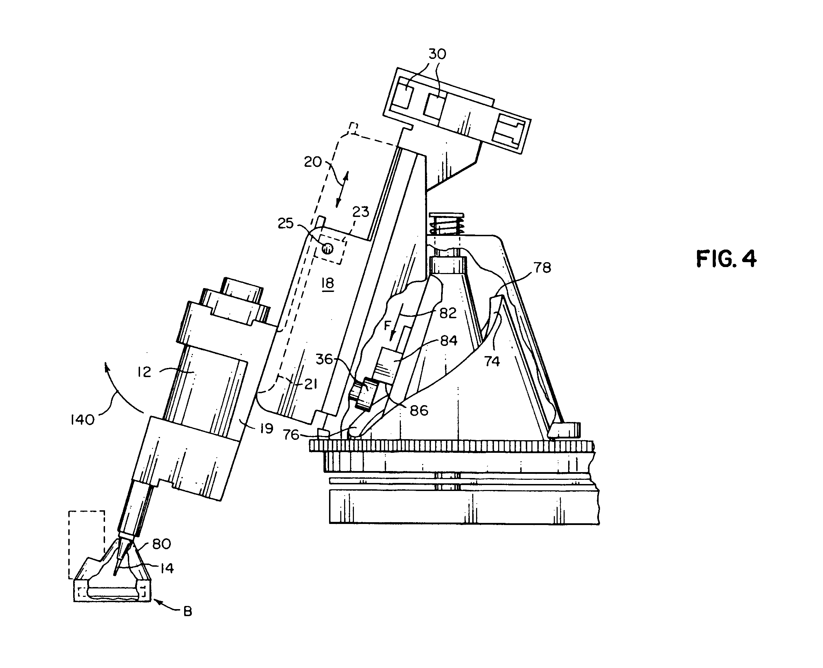

More specifically, the liquid dispensing mechanism 10 comprises a pump 12 of conventional construction which is similar to the pump used in the analyzer pump available on the analyzer from Eastman Kodak Company under the trademark "Ektachem 700". The pump 12 carries a disposable tip 14 on a tip support 16. Pump 12 includes a housing 18 to which pump 12 is connected. Preferably, housing 18 of pump 12 comprises, as shown more clearly in Figure 4, a body 19 which has a yoke 21 extending therefrom to two lugs 23 which pivot to frame 18 at 25.

Housing 18 reciprocates, in the direction shown by arrow 20, on a carrier 22 having opposed rails 24, 26 between which housing 18 slides. A position sensor flag 28 is mounted on the top of housing 18 to cooperate with sensing means 30 located at the top 32 of carrier 22. This is also shown in Figure 4.

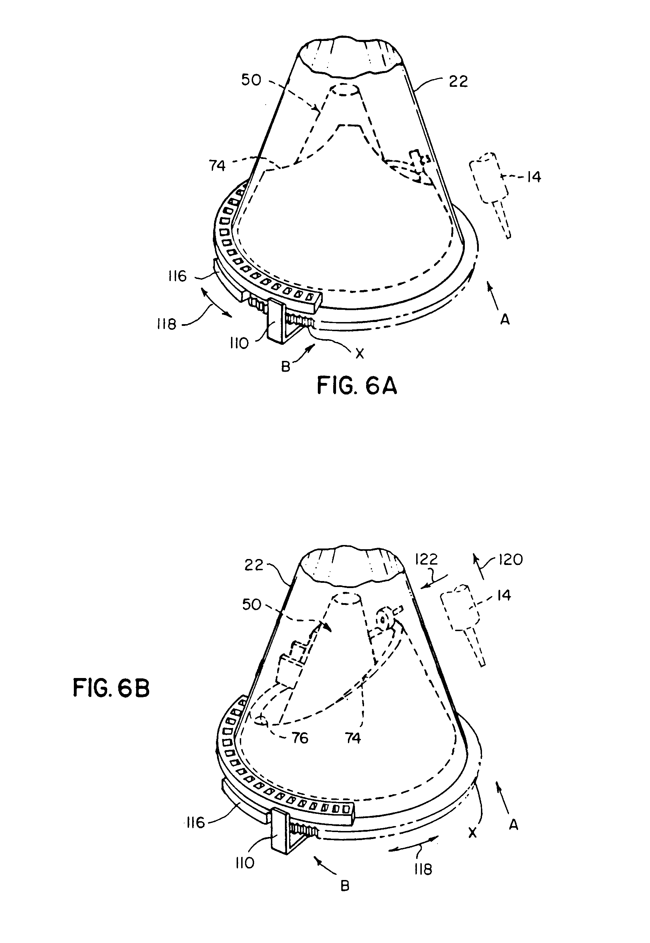

Carrier 22, as shown in Figure 1, is shaped to slip over a cam mechanism 50 with which carrier 22 frictionally engages. A slot 34 is formed in carrier 22 between rails 24, 26 to allow a cam follower 36 (shown also in Figure 5) and its idler arm 38 to project therethrough. Arm 38 is fixed to pump 12 or its housing 18. Preferably, a shoulder 40 projects from pump 12 or its housing 18 to guide the pump 12 within slot 34.

The frictional engagement of cam 50 by carrier 22 is preferably achieved, as shown in Figures 1 and 5, by a central fixed post 52 which passes through center portion 53 of the cam. A compression spring 54 surrounds the post 52 and bears on end wall 56 of carrier 22. A retaining clip 58 holds the spring 54 in place. End wall 56 is apertured at 60 to accommodate post 52 which projects therethrough.

Bottom wall 62 of cam 50 adjoins a curved sidewall 64 which is preferably provided with gear teeth 66. Most preferably, sidewall 64 at the teeth portion 66 is circular. Gear teeth 66 are positioned and shaped to engage a pinion gear 68 driven by a conventional motor 70 to cause cam 50 to rotate about the axis of post 52 in the direction shown by arrow 72.

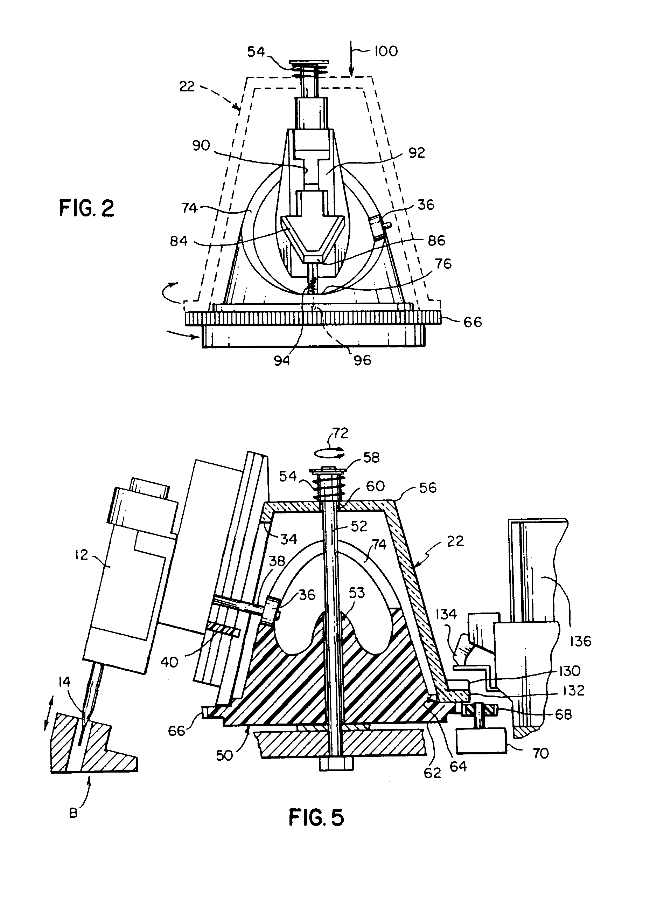

A critical aspect of cam 50 is cam track 74, which extends in three dimensions around post 52, as shown in Figures 2, 4, 5 and 6A to 6B. Track 74 includes a bottom-most portion 76 and all the rest of the track rises above that portion to completely encircle post 52. Because cam 50 is preferably conical in overall shape as shown in this embodiment, track 74 also traces the surface of the cone defined by this portion of cam 50. The uppermost portion 78 of track 74 is generally opposite to the lowermost portion 76, that is, on the opposite side of post 52 as is best shown in Figure 4.

Cam follower 36 rides on track 74 due to gravity, except when pump carrier 22 and its cam follower are at bottom portion 76. At this time, the pump is at one of the two operative stations A or B, station B being schematically shown in Figure 1 and partially schematically in Figure 4. At either station, a top surface 80 or 80' is effective to resist further downward advance of tip 14 or pump 12. As a result, cam follower 36 is lifted off of track 74. However, to be sure that tip 14 is in fact completely seated at the station (for dispensing or aspirating, as the case may be), means are provided for biasing the cam follower downward with a predetermined positive force F indicated by arrow 82 in Figure 4. Such means preferably comprise a downwardly-directed camming surface 84, preferably V-shaped with the bottom-most portion 86 representing the complete sealing position of cam follower 36, and hence of tip 14 at either station A or B. This is shown particularly clearly in Figure 2.

In order to bias camming surface 84 downwardly, it is slidably mounted in a track 90 on face 92 of cam 50. Inside track 90, a tension spring 94 is connected at one end to surface 84, and at its opposite end 96 to cam 50.

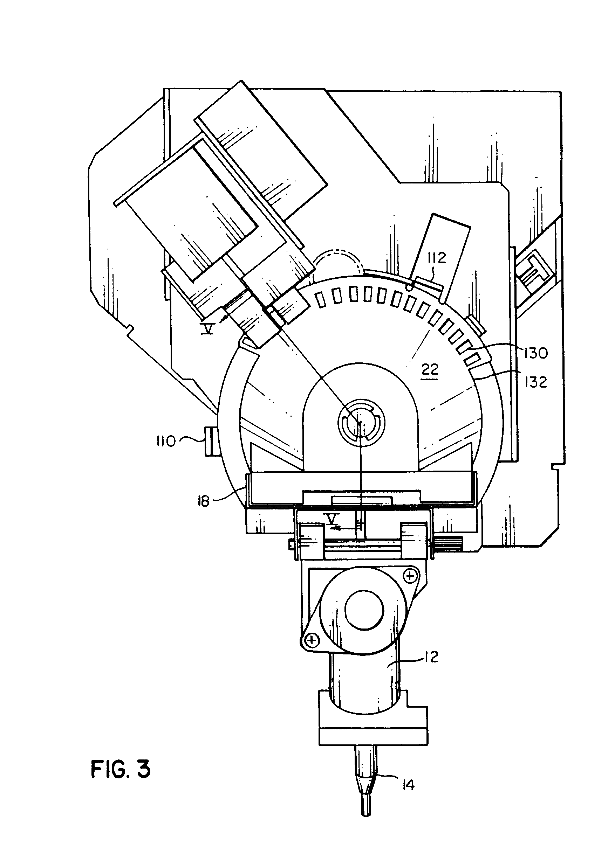

Because of the downward force F exerted by spring 54, indicated by arrow 100 in Figure 2, pump carrier 22 generally rotates with cam 50 as it is driven to rotate. However, means are provided, such as two limit members 110 and 112 fixed to support 114 of mechanism 10, as shown in Figures 1 and 3, to stop rotation of carrier 22 and to confine its rotation within the arc between members 110 and 112. An outwardly projecting lip 116 is formed integral with carrier 22, shown more clearly in Figure 1 and especially Figures 6A and 6B. Lip 116 is sized and positioned to abut against either limit member 110 or 112 as cam 50 rotates in the direction of arrow 118 in Figures 6A and 6B. The effect, of course, is to cause carrier 22 to come to a stop at one of the limit member 110, 112, for example, at member 110 as shown in Figure 6B, while cam 50 continues to rotate inside carrier 22. In particular, gear tooth X, as shown in Figure 6A, continues to rotate to its position shown in Figure 6B, even though carrier 22 does not progress beyond the position shown in Figure 6B. This in turn causes cam track 74 (in phantom) to continue to rotate relative to the now stationary carrier 22, as is shown by the relative positional changes of track 74 in Figure 6B from that of Figure 6A. Cam follower 36 in turn is forced, along with the pump 12 and tip 14, to rise up since track 74 is "rising" in the direction of arrow 120 in Figure 6B.

In the raised "inoperative" position shown in Figure 6B (in phantom), the pump 12 and tip 14 are in position to be rotated (in the direction indicated by arrow 122) from that station, station A, to station B, without bumping into any structure which is otherwise in the way. This is achieved by reversing the rotation of cam 50, in the direction shown by arrow 124, at which time carrier 22 again moves with cam 50 until the other limit member 112, not shown in Figure 6B, encounters lip 116 to force carrier 22 to once again stop while cam 50 continues in the direction of arrow 124.

Because the same reference liquid is aspirated from station A for many tests, tip 14 need not be replaced frequently. However, it is replaced for maintenance and cleanliness on occasion, for example, every day, and for this purpose, means are included for removably locking carrier 22 to its last known position while tip 14 is manually removed. Such locking means preferably comprise, as shown in Figures 1 and 5, teeth 130 molded into side edge 132 of carrier 22 adjacent lip 116. Cooperating with teeth 130 is a lock lever 134 actuated by a solenoid 136 to be either in a raised position, as shown, or a lowered position to engage teeth 130 to lock against relative rotation of carrier 22. Optionally, a tension spring 138, as shown in Figure 1, can be used to bias lever 134 upward into its disengaged position, so that solenoid 136 need only lower lever 134. In use, lever 134 is effective to hold carrier 22 in place to allow maintenance of the pump 12 and tip 14. For such maintenance, the pump 12 is preferably pivoted upwardly about pivot 25 as shown by arrow 140 in Figure 4.

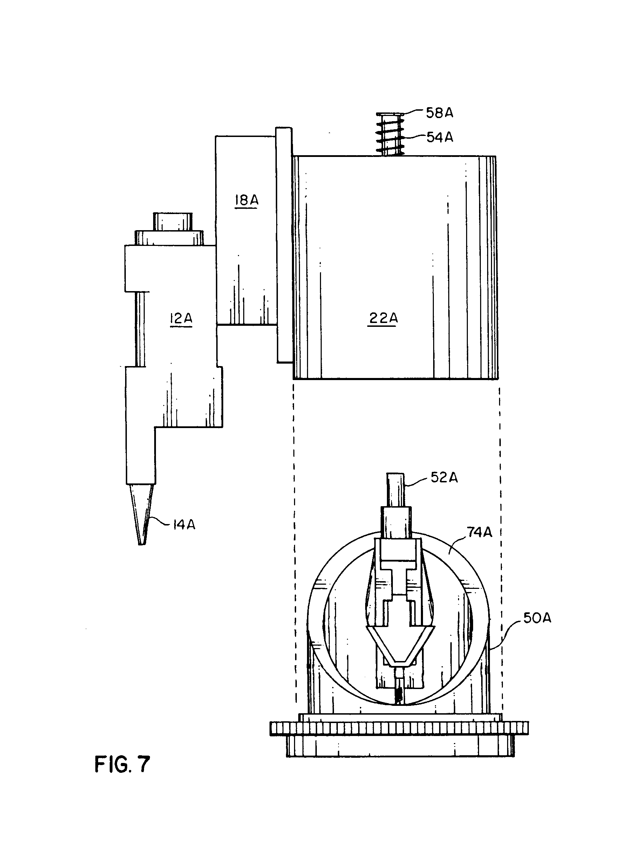

Although a conically shaped cam 50 and its carrier is described to produce movement of tip 14 parallel to the tangent to the cone which has both a vertical and a horizontal component, other shapes are also useful. Thus, as shown in Figure 7, the cam and the carrier can be cylindrical rather than conical. Parts similar to those previously described bear the same reference numeral, to which the distinguishing suffix "A" is appended.

More specifically, pump 12A supports a tip 14A for reciprocation on carrier 22A which frictionally engages cam 50A by reason of a compression spring 54A held by clip 58A as before. The difference is, however, that the exterior shape of cam 50A is cylindrical with track 74A being formed in the cylindrical wall of the cam. Carrier 22A is also cylindrical. As a result, the cam follower and resultant movement of pump 12A is only vertical or pivotal about post 52A, so that tip 14A lacks any horizontal component to its motion as dictated by cam 50A.

Either of the two dispensing mechanisms previously described can be used in any analyzer necessitating the dispensing of a reference liquid or some other standard liquid, such as a wash liquid. Figure 8 illustrates the use of the mechanism of Figure 1 in the analyzer available under the trademark "Ektachem 700" as noted above.

More specifically, such an analyzer features a tray 222 containing cups of serum samples 220 and disposable tips 230 which cooperate with a dispensing station 210 having a pump 240. Station 210 is moved by cart 248 and gear 245 through the plane marked H to first pick up a tip 230, then penetrate caps 224 of cups 220 to aspirate a patient sample, and then down into a slide block 260 and one of two entry ports 262, 264 on the block. (Slide block 260 is part of a rotating distributor arm, not shown.) A sloping side aperture 270 allows entry of tip 14 when slide block 260 is at station B as shown. Movement of tip 230 is of course dictated by mechanism 10 as it moves tip 14 from station A to station B. In this fashion, reference fluid is dispensed on to an ISE test element E' shown in phantom, while tip 230 dispenses a patient sample on to the same test element.

After dispensing, tip 14 is preferably returned to station A where it is inserted to keep it from drying out.

In an alternative embodiment, not shown, a second pump housing and pump is mounted on the carrier circumferentially spaced from the first to cooperate with the same dispensing station B. Such a second pump can be used to dispense a different liquid from the first. To stop the carrier in position to allow the second pump to move into station B, the lock lever (134 in Figure 1) is actuated to engage the teeth on the carrier.

Slot 34 of carrier, as shown in Figure 5, extends in a direction which is in a plane through the axis of rotation defined by post 52, that is, the slot and the post are coplanar.

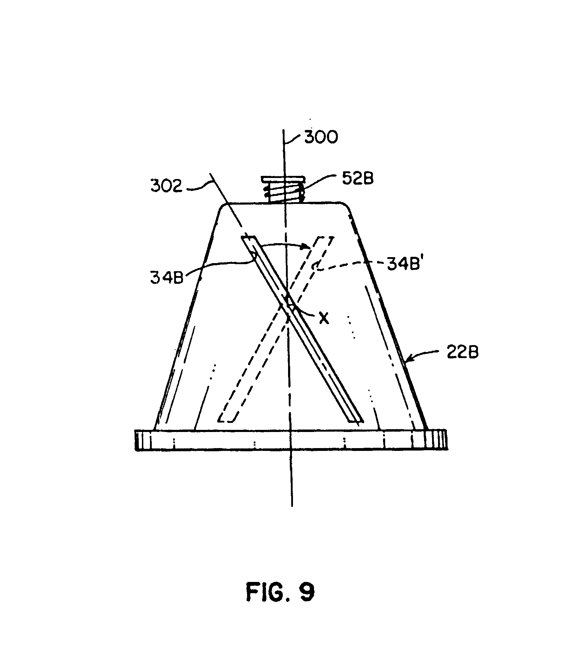

Additionally, slot 34B can be non-coplanar with the axis of rotation 300, as shown in Figure 9, as long as at least a portion of it falls in and defines a plane (which extends perpendicular to the sheet of the drawing, through line 302) which intersects the axis of rotation and post 52B at some point, e.g. point X. (Parts similar to those previously described bear the same reference numerals to which the distinguishing suffix "B" is attached.) As shown the entire slot lies in such a plane since it is linear.

Alternatively, the angling of slot 34B out of the plane of post 52B can be in either direction, as suggested by the alternated position 34B' shown in phantom, that is, the slot can be disposed anywhere between the position 34B and 34B'. The value of the angle out of the vertical is not critical, except that small angles, and particularly zero degrees, are preferred.

The remainder of the mechanism, e.g. the cam, etc., is generally the same as described above.

**Claims**

1. A liquid dispensing mechanism (10) for use in an analyzer comprising:-
   a support (114),
   a pump (12, 18, 19, 21; 12A, 18A) including a tip support (16) mounted thereon for retaining a disposable liquid-containing tip (14; 14A), and
   moving means (36, 50, 62, 64, 66, 68, 70, 74; 50A, 74A) for moving the pump (12; 12A) vertically and rotationally between at least two operative positions in which liquid is either aspirated into or dispensed from the tip (14; 14A), the moving means (36, 50, 62, 64, 66, 68, 70, 74; 50A, 74A) including a rotatable three-dimensional cam (50, 74; 50A, 74A), a cam follower (36) mounted for movement the cam (50, 74; 50A, 74A), and rotating means (62, 64, 66, 68, 70) for rotating the cam (50, 74; 50A, 74A) about a vertical axis between the at least two operative positions in response to command signals,
   characterized in that the moving means (36, 50, 64, 66, 68, 70, 74; 50A, 74A) further includes a carrier (22; 22A; 22B) mounted over and surrounding the cam (50, 74; 50A, 74A), coupling means (52, 54, 56, 58; 52A, 54A, 58A; 52B) for frictionally coupling the carrier (22; 22A; 22B) to the cam (50, 74; 50A, 74A) for rotation therewith, and stop means (110, 112, 116) for limiting the rotation of the carrier (22; 22A; 22B) between two circumferential positions on the cam (50, 74; 50A, 74A) which correspond to the at least two operative positions.

2. A mechanism according to claim 1, wherein the stop means (110, 112, 116) comprise two limit members (110, 112) fixed to the support (114) and an outwardly protruding lip member (116) formed on the carrier (22; 22A; 22B) thereby forcing the cam follower (36) to move relative to the cam (50, 74; 50A, 74A).

3. A mechanism according to claim 1 or 2, wherein the cam (50, 74; 50A, 74A) includes a cam track (74; 74A) having an upper portion (78) and a lower portion (76), the lower portion (76) extending below the lowest point of travel of the cam follower (36).

4. A mechanism according to claim 3, further including bias means (84, 86, 90, 92) for biasing the cam follower (36) downward with a positive force (F) when it is located at its lowest point of travel in order to seat the tip (14; 14A) correctly at either one of the at least two operative positions.

5. A mechanism according to any one of the preceding claims, further including on the carrier (22; 22A; 22B), locking means (130, 132, 134, 136) for releasably locking the carrier (22; 22A; 22B) in any position between or at the at least two operative positions so that maintenance can be performed on the pump (12; 12A) without disturbing the last-known location of the carrier (22; 22A; 22B).

6. A dispensing mechanism according to any one of the preceding claims, wherein the cam (50, 74) is on a surface of a cone, and the carrier (22; 22B) comprises a housing having a conical shape which fits over that cone.

7. A mechanism according to any one of claims 1 to 5, wherein the cam (50A, 74A) is on the conical surface of a cylindrical barrel, and the carrier (22A) comprises a cylindrical housing which fits over the barrel.

8. A mechanism according to any one of the preceding claims, wherein the pump (12, 18, 19, 21; 12A, 18A) is slidably mounted on the carrier (22; 22A; 22B) for reciprocal movement, and is attached to the cam follower (36), the carrier (22; 22A; 22B) having a slot (34; 34B, 34B') formed therein to permit the connection between the cam follower (36) and the pump housing (18; 18A), the slot (34; 34B, 34B') falling in a plane which at least intersects the axis of rotation (point X).

9. A mechanism according to claim 8, wherein the slot (34) extends in a direction which falls in a plane through the axis of rotation.

FIG. 1

FIG. 2

FIG. 5

FIG. 3

FIG. 4

FIG. 6A

FIG. 6B

FIG. 7

FIG. 8

**FIG. 9**